# EUROPEAN PATENT APPLICATION

(11) **EP 1 930 921 A1**
(43) Date of publication of application: **11.06.2008**
(21) Application number: 06811262.2
(22) Date of filing: 28.09.2006
(51) Int. Cl.: H01G 9/058, C01B 31/10

(54) **CARBON MATERIAL FOR ELECTRIC DOUBLE LAYER CAPACITOR AND ELECTRIC DOUBLE LAYER CAPACITOR**

(30) Priority: 30.09.2005 JP 2005288616; 04.11.2005 JP 2005321362
(71) Applicant: Cataler Corporation, Shizuoka-ken 437-1492 (JP)
(72) Inventor: KUME, Tetsuya, Kakegawa-shi, Shizuoka 4371492 (JP); HIGAONNA, Yasuyuki, Kakegawa-shi, Shizuoka 4371492 (JP)
(74) Representative: TBK-Patent
(86) International application number: PCT/JP2006/319924
(87) International publication number: WO 2007/037523

(57) **Abstract**

An object of the present invention is to provide an electric double layer capacitor carbon material and an electric double layer capacitor which can exhibit excellent charge/discharge characteristics. The carbon material for electric double layer capacitors in accordance with the present invention is **characterized in** having the BET specific surface area in a range of 300 - 1000 m²/g, the carbon interlayer distance in a range of 0.360 - 0.380 nm and the carbon strength of 2000 cps or more. This enables to form an electric double layer capacitor having a high capacitance and a low internal resistance. The electric double layer capacitor of the present invention utilizes this carbon material as a polarizable active material. The capacitor of the present invention exhibits a high capacitance and a low internal resistance.

## Description

### Technical Field

The present invention relates to a carbonaceous material, which is used for a polarizable active material in an electric double layer capacitor.

### Background Art

Recently, electric double layer capacitors which exhibit reduced internal resistances and have enlarged capacities have been developed. It has been expected to apply the electric double layer capacitors to power usage such as electric vehicles. The electric double layer capacitors are based on the principle that a pair of polarizable electrodes are disposed so as to face to each other in an electrolyte solution with a separator interposed therebetween to make a positive electrode and a negative electrode so that electric charges are accumulated in electric double layers, which are formed in the interfaces between the positive and negative electrodes (i.e., polarizable electrodes) and the electrolyte solution.

Such electric double layer capacitors are disclosed in Japanese Unexamined Patent Publications (KOKAI) No. H11-317333, No. 2002-25867 and Patent Publication No. 3689948 for instance. H11-317333 discloses an electric double layer capacitor using a carbon material that comprises graphite-like microcrystalline carbon. The carbon material is obtained by an activation treatment. The interlayer distance of the microcrystalline carbons is in a range of 0.365 to 0.385 nm.

KOKAI No. 2002-25867 discloses an electric double layer capacitor using a nonporous carbon that comprises graphite-like microcrystalline carbon, has specific surface area 270 m²/g or less and the interlayer distance of the microcrystalline carbons d₀₀₂ is between 0.360 - 0.380 nm.

Patent No. 3689948 discloses an electric double layer capacitor that comprises a cathode having a polarizable electrode material mainly consisting of activated carbon, an anode having carbonaceous material on which lithium ion is occluded by chemical process or electrochemical process, the carbon material is capable of occlusion and desorption of lithium ion, and nonaqueous electrolyte solution containing lithium salt.

However, there was a problem that the capacitor produced from the carbon material for electric double layer capacitor disclosed in KOKAI No. H11-317333 has a large internal resistance. While the capacitor produced from the carbon material for electric double layer capacitor disclosed in KOKAI No. 2002-25867 has poor diffusion of electrolyte solution due to small specific surface area of the carbon material. Consequently, there was a problem that the resistance between electrolyte solution and the carbon material becomes large and the internal resistance is increased.

### Disclosure of Invention

The present invention has been developed in view of the aforementioned circumstances. It is therefore an object of the present invention to provide a carbon material for electric double layer capacitor and an electric double layer capacitor which can exhibit excellent charge and discharge property (having a large capacitance and a small internal resistance). As a result of studies to solve the above problems, the present inventors completed the invention regarding a carbon material for electric double layer capacitors.

The present invention provides a carbon material for electric double layer capacitors having:
the BET specific surface area in a range of 300 to 1000 m²/g,
the interlayer distance of the carbons in a range of 0.360 to 0.380 nm and
the carbon strength of 2000 cps or more.

Moreover, an electric double layer capacitor in accordance with the present invention comprises a carbon material having:
the BET specific surface area in a range of 300 to 1000 m²/g,
the interlayer distance of the carbons in a range of 0.360 to 0.380 nm and
the carbon strength of 2000 cps or more.

### Best Mode for Carrying Out the Invention

Hereinafter, while naming embodiment modes, the present invention will be described more specifically.

### (Mode for Carrying Out)

### (A carbon material for electric double layer capacitors)

The carbon material for electric double layer capacitors in accordance with the present invention is a carbon material used as a polarizable active material in electric double layer capacitors.

A carbon material for electric double layer capacitors in accordance with the present invention has the interlayer distance of the carbons d₀₀₂ in a range of 0.360 - 0.380 nm and the carbon strength at d₀₀₂ is 2000 cps or more, as well as having the BET specific surface area in a range of 300 - 1000 m²/g. That is, the carbonmaterial in accordance with the present invention comprises graphite-like microcrystalline carbon and it is a highly precise carbon material. At the same time, the carbon material selectively has pores or amorphous structure. Such pores or amorphous structure enable the carbon material for electric double layer capacitors in accordance with the present invention to have as large capacitance and small internal resistance as the carbon materials disclosed in the above-mentioned patent documents 1 and 2 (KOKAI No. H11-317333 and No. 2002-25867).

Since the electrode material (a carbon material) of the polarized electrode in accordance with the present invention has the specific surface area in a range of 300 - 1000 m²/g, the internal resistance is lower than the carbon materials for electric double layer capacitors in patent documents 1 and 2. However, when an electric double layer capacitor uses the carbon material which has the BET specific surface area of smaller than 270 m²/g, the internal resistance is increased as the migration resistance increases in electrolyte solution, although it is possible to obtain a large capacitance. Moreover, when the BET specific surface area is 1000 m²/g or more, it is not possible to obtain a large capacitance, since the capacitance emerges inside pores like a general active carbon. In accordance with the present invention, more preferable BET specific surface area of the carbon material is in a range of 300 - 700 m²/g.

As for the carbon material for electric double layer capacitors in accordance with the present invention, the carbon interlayer distance is in a range of 0.360 - 0.380 nm. When the interlayer distance is less than 0.360, it is difficult for electrolyte to be inserted into the carbon layers, which will lead deterioration of the capacitance and increase of the internal resistance. In addition, when the distance is more than 0.380 nm, carbon density will decrease and a high capacitance cannot be obtained. The interlayer distance is more preferably in a range of 0.365 - 0.375 nm.

The carbon material for electric double layer capacitors in accordance with the present invention has the carbon strength of 2000 cps or more at d₀₀₂ and it is a highly precise carbon material having developed graphite-like microcrystallites. Because of this, the carbon material in accordance with the present invention is suitable for a polarizable electrode material for electric double layer capacitors having a large capacitance. When the carbon strength is less than 2000 cps, it is not possible to obtain a large capacitance since precision of the material will be low.

Process of manufacture of the carbon material for electric double layer capacitors in accordance with the present invention is not limited, as long as the amounts of the BET specific surface area, the carbon interlayer distance and the carbon strength fall within the predetermined range.

The carbon material for electric double layer capacitors in accordance with the present invention can be produced, for instance, by carbonization and activation of petroleum pitch or carboniferous-system pitch which has graphite-like micro crystallites and is relatively amorphous with low orientation. Here, the BET specific surface area of the carbon material is determined according to the activation condition. Comparatively amorphous materials with low orientation tend to form a large specific surface area after activation treatment. By using petroleum pitch which has graphite-like micro crystallites, the carbon interlayer distance and the carbon strength of the material can be within the predetermined range.

### (An electric double layer capacitor)

An electric double layer capacitor of the present invention uses the above-described carbon material for electric double layer capacitors as a polarizable electrode material. In accordance with the present invention, a capacitor for electric double layer capacitors indicates a device that the positive and negative poles are formed by a pair of polarized electrodes disposed opposite to each other via a separator in the electrolyte solution. The electric charge accumulates on the electric double layer that is formed in the interface of at least one electrolyte (a polarized electrode) and an electrolyte solution. Namely, the capacitor of the present invention includes so-called hybrid capacitor which uses different materials for an anode and a cathode. The capacitor of the present invention for electric double layer capacitors has a large capacitance, as well as having a small internal resistance.

In accordance with the present invention, the above-described carbon material for electric double layer capacitors can be used for at least one of the pair electrodes. That is, the electric double layer capacitor of the present invention can be composed by using the above carbon material only for either a cathode or an anode, or for both cathode and anode. Further, when the above carbon material for electric double layer capacitors is used for both cathode and anode, more than one of the amounts of the BET specific surface area, the carbon interlayer distance and the carbon strength may be different in a cathode and an anode.

Apart from the electrode material, the electric double layer capacitor in accordance with the present invention can be formed from conventionally known materials. For example, it can be produced by manufacturing sheet-shaped electrode and placing them via a separator in a case with electrolyte solution.

A sheet-shaped electrode can be formed as follows, for instance. First, a carbon material is crushed to approximately 5 -100 µm in the grain size. Then, carbon black as a conductive adjuvant and polytetrafluoroethylene (PTFE) as a binder are added and mixed in order to give high conductivity to the carbon material powder. Finally, the resultant material is shaped in a sheet by a rolling rod. As a conductive adjuvant, powder graphite and the like can be used other than carbon black (such as acetylene black). As a binder, polyvinylidene fluoride (PVDF), polyethylene (PE) or polypropylene (PP) can be used other than PTFE. In this case, compounding ratio among carbon material (activated carbon), conductive adjuvant (carbon black) and binder (PTFE) is generally 10:0.5-1.0:0.5-0.25.

A collector is installed to the gained electrodes and the electrodes are disposed via a separator to form a positive pole and a negative pole. Thereafter an organic solvent containing an electrolyte is immersed to assemble an electric double layer capacitor.

As an organic solvent used in an electric double layer capacitor, it is possible to use, for instance, carbonates such as dimethylcarbonate, diethylcarbonate, ethylenecarbonate and propylenecarbonate, nitril group such as acetonitrile and propiononitrile, lactones such as γ-butyrolactone, α-methyl-y -butyrolactone, β-methyl-γ-butyrolactone, γ-valerolactone and 3-methyl-γ-valerolactone, sulfoxides such as dimethylsulfoxide and diethylsulfoxide, amides such as dimethylformamide and diethylformamide, ethers such as tetrahydrofuran and dimethoxyethane, dimethyl sulfolan and sulfolan. These organic solvents can be used as a solo or as a mixture solvent more than two sorts.

As an electrolyte dissolved in these organic solvents, it is possible to use, for instance, tetrafluoroborates such as tetraethyl ammonium tetrafluoroborate, tetramethyl ammonium tetrafluoroborate, tetrapropyl ammonium tetrafluoroborate, tetrabutyl ammonium tetrafluoroborate, trimethylethyl ammonium tetrafluoroborate, triethylmethyl ammonium tetrafluoroborate, diethyldimethyl ammonium tetrafluoroborate, N-ethyl-N-methyl pyrrolidinium tetrafluoroborate, N, N-tetramethylenepyrrolidinium tetrafluoroborate, 1-ethyl-3-methylimidazolium tetrafluoroborate, perchlorates such as tetraethyl ammonium perchlorate, tetramethyl ammonium perchlorate, tetrapropyl ammonium perchlorate, tetrabutyl ammonium perchlorate, trimethylethyl ammonium perchlorate, triethylmethyl ammonium perchlorate, diethyldimethyl ammonium perchlorate, N-ethyl-N-methyl pyrolidinium perchlorate, N, N-tetra methylenepyrrolidinium perchlorate, 1-ethyl-3-methyl imidazolium perchlorate, hexafluorophosphates such as tetraethyl ammonium hexafluorophosphate, tetramethyl ammonium hexafluorophosphate, tetrapropyl ammonium hexafluorophosphate, tetrabutyl ammonium hexafluorophosphate, trimethylethyl ammonium hexafluoro phosphate, triethylmethyl ammonium hexafluorophosphate, diethyl dimethyl ammonium hexafluorophosphate. Moreover, when the carbon material that is capable of occlusion and desorption of lithium ion, is used for one of the electrode in a capacitor, it is desirable to use, as an electrolyte, lithium salt such as LiCl0₄, LiCF₃, SO₃, LiBF₄, LiPF₄, LiAsF₆, LiSbF₆, LiCF₃CO₂, LiN(CF₃ SO₂)₂.

It is preferable that the density of an electrolyte is in a range of 0.5 to 5 mol/L. More preferably, it should be in a range of 1.0 - 2.5 mol/L. When the electrolyte density is lower than 0.5 mol/L, the capacitance deteriorates due to lack of electrolyte. Moreover, when using ionic fluid like 1-ethyl-3-methylimidazolium, the fluid should be used as it is or it should be mixed with electrolytic solution.

### Examples

The present invention will be explained in detail below with reference to examples.

### (Production of carbon materials)

As examples of the present invention, carbon materials for electric double layer capacitors, sample 1-5, were produced by the following process.

### (Production of carbon material for electric double layer capacitors)

As a rawmaterial, a carboniferous-systempitch that has graphite-like micro crystallites and is relatively amorphous with low orientation was prepared. Then, under a pressure condition of 0.1-0.5 MPa, the temperature was raised at a rate of 5 °C/min up to the predetermined temperature of 300-500 °C. Thereafter, the material was heated for 1 to 5 hours and the preliminary carbonization treatment was performed.

Then, under a pressure condition of 0.2 MPa or less, the temperature was raised at a rate of 5 °C/min up to the predetermined temperature of 700-900 °C. Thereafter, the material was heated for 1-5 hours and the carbonization treatment was performed.

After the carbonization treatment, the activation treatment was performed using an alkali compound (an alkali metal hydroxide, an alkali metal carbonate). In the activation treatment, carbide and an alkali compound were used in amounts such that the ratio of the amounts was 1:1 to 1: 5 by weight. The temperature was maintained at 70-900 (preferably 800 °C) for 4 - 10 hours. Note that the activation treatment was performed under the atmosphere of nitrogen gas or the atmosphere of nitrogen gas containing water vapor. Then, it was thoroughly washed with water and crushed to become average grain size D50=5-50 nm.

Finally, under the atmosphere of nitrogen gas containing hydrogen gas in the ratio of 3-100%, calcination was performed at 700-900 °C (preferably 800 °C) to produce carbon materials for electric double layer capacitors in accordance with the present invention, samples 1-5. In addition, carbon materials for electric double layer capacitors, samples 1-5, were produced by altering each condition described above.

Furthermore, when producing a carbon material for electric double layer capacitors, amorphous materials with low orientation were used in samples 1-3 after preliminary carbonization. While in samples 4-5, precise materials with high orientation were used. The crystal orientation can be relatively compared by X-ray diffraction peak at d002. The result is shown in table 1. As for the measurement method, an X-ray diffractometer (manufactured by Rigakudenkisha, Rint-2500) was used. The measuring condition was set as follows; a tube bulb; Cu (Kα), tube voltage: 40kV, tube current: 40 mA, temperature range 8-68 °C.

When a material is high orientational material like graphite (high crystallinity), for instance, the diffraction peak generally shows sharp initial rise. Here, to compare the diffraction strength and half-width at d002 regarding the materials used for samples 1-3 and samples 4-5, the material of samples 1-3 shows lower diffraction strength and broader half-width at d002 than that of samples 4-5. The material of samples 1-3 also shows broader diffraction peak than that of sample 4-5. This indicates the material used for the examples is relatively amorphous with low orientation. In addition, the same can be said from the fact that the material tends to have broad carbon interlayer distance and its crystal particles tend to be thin.

**[Table 1]**

| Material No. | Orientation | Sample No. | Carbon strength at d002(cps) | Half-width at d002 | Carbon interlayer distance (nm) | Crystalline thickness/Lc (nm) |
|---|---|---|---|---|---|---|
| ① | low | Sample 1~2 | 3018 | 5.168 | 0.363 | 1.57 |
| ② | | Sample 3 | 2845 | 5.318 | 0.363 | 1.53 |
| ③ | high | Sample 4 | 3804 | 4.736 | 0.357 | 1.72 |
| ④ | | Sample 5 | 4470 | 4.783 | 0.359 | 1.70 |

The BET specific surface area, the carbon interlayer distance and the carbon strength were measured in relation to the carbon materials for electric double layer capacitors of the produced samples 1-5. The result is shown in Table 2.

The BET specific surface area was measured with pore distribution measuring apparatus (manufactured by Quantachrome, NOVA-3000), and calculated by the BET method. The carbon interlayer distance and the diffraction strength at d002 were measured with X-ray diffractometer (manufactured by Rigakudenkisha, Rint-2500). The measuring condition was as follows; a tube bulb; Cu (Kα), tube voltage: 40kV, tube current: 40 mA, measure range 8-68° . Carbon interlayer distance and diffraction strength at d002 (cps) were measured from the diffraction peaks at d002.

**[Table 2]**

| | BET specific surface area(m²/g) | Carbon interlayer distance(nm) | Carbon strength at d002(cps) | Capacitance (F/ml) | Internal resistance(Ω) |
|---|---|---|---|---|---|
| Sample 1 | 350 | 0.364 | 2150 | 28.1 | 1.1 |
| Sample 2 | 500 | 0.368 | 2100 | 26.8 | 1.0 |
| Sample 3 | 700 | 0.371 | 2050 | 24.1 | 0.9 |
| Sample 4 | 150 | 0.364 | 3000 | 28.5 | 1.7 |
| Sample 5 | 70 | 0.366 | 3900 | 33.2 | 1.9 |
| Sample 6 | 900 | 0.404 | 460 | 15 | 0.5 |
| Sample 7 | 1500 | 0.389 | 300 | 11 | 0.6 |

(Production of an electric double layer capacitor) An electric double layer capacitor was manufactured using the carbon materials for electric double layer capacitors of the samples 1-5 as a polarizable active material in electrodes.

First, as an active material, the carbon materials of samples 1-5 were vacuum dried (120°C, 0.133Pa (10⁻³Torr), then, the active material carbon black (made by Cabot, VURCAN-XC72R) as a conductive adjuvant and PVDF (made by Kureha Kagakusha, #9210) as a binder were prepared in amounts such that the ratio of the amounts is 9:1:2 by weight and mixed with N-methylpyrrolidone (NMP) as a solvent. After adjusting it to moderate viscosity, vacuum kneading was performed to the material to form slurry. The resultant slurry was applied to current collecting aluminum foil, pressed with roll pressing machine to form a square of 50×50 mm, thickness t=50µm and this was used as an electrode sheet.

A vacuum drying (at 120°C, 0.133Pa (10⁻³Torr), for 2-6 hours) was performed to this electrode sheet with glass fiber filter paper (product of Advantech Toyosha, GA-100). Thereafter, a vacuum impregnation was performed in a glove box. Then, EMI-BF₄, tetrafluoroborate of 1-ethyl-3-methylimidazolium, that is ionic liquid, was used as an electrolyte. After impregnation, the resultant material was vacuum packed in aluminum laminate bags to make capacitor cells using the carbon materials of samples 1-5.

### (Evaluation of the capacitors)

Evaluation was conducted regarding charge and discharge property of the produced capacitors. Charge and discharge property of the capacitors were evaluated by charging constant current and monitoring ascension of voltage as electric charge accumulated to the capacitors. That is, by charging constant current 10 mA (or 5 mA) and maintaining the voltage when the voltage reached the predetermined amount, for example, 3.75 V in the positive and negative electrodes, it became constant potential charge mode and the current began to attenuate. When the predetermined charge time T (for normally 4500 seconds) had passed, the polarity of electrodes was converted. It was discharged by constant current mode, constant current 10 mA (or 5 mA), until the voltage became 0 V. After this operation, with an interval (for normally 180 seconds), charge and discharge of constant current were repeated again 1 to 3 times as described above. Afterwards, the impressed voltage was lowered to 3.3 V and the discharge limit voltage was set to 0.5 V. With the same current, a cycle examination was carried out. Measurement was carried out using a charge and discharge apparatus that enables 8 channels simultaneous processing (product of Hokutodenko, HJ1001SM8). The result is shown in Table 2 together with the obtained measurement result (the capacitance, the internal resistance).

As a comparative examination, capacitors were produced in the same way using the samples 6-8 from coconut shell activated carbon and an evaluation was conducted. The result is also shown in Table 2. Moreover, the BET specific surface area, the carbon interlayer distance and the carbon strength of coconut shell activated carbon, samples 6-8, are also shown.

As shown in Table 2, it is observed that the capacitors using the carbon material of the samples 1-3, whose BET specific surface area, carbon interlayer distance and carbon strength fall in the predetermined range, have a high capacitance and a low internal resistance.

It is also observed that the capacitors using the samples 4 and 5, whose carbon interlayer distance and carbon strength fall in the predetermined range but the BET specific surface area is smaller than the predetermined range, have an improved capacitance, but the internal resistance is deteriorated compared to the capacitors of the samples 1-3.

The capacitor of the samples 6, whose BET specific surface area falls in the predetermined range but the carbon interlayer distance and the carbon strength are larger than the predetermined range, the capacitor of the sample 7 whose BET specific surface area, the carbon interlayer distance and the carbon strength are lager than the predetermined range, or the capacitor of the sample 8 whose the carbon interlayer distance falls in the predetermined range but BET specific surface area and the carbon strength don't fall in the predetermined area, have a small internal resistance, but the capacitance is considerably deteriorated compared to the capacitors of the samples 1-3.

That is, it is observed that the capacitors of sample 1-3 using the carbon materials, whose BET specific surface area, the carbon interlayer distance and the carbon strength fall in the predetermined range, have a high capacitance and a low internal resistance. Such high efficiency derives from the carbon materials used for the polarized active material in electrodes. It can be said that the carbon materials, whose BET specific surface area, the carbon interlayer distance and the carbon strength fall in the predetermined range, exhibit these effects.

In other words, the carbon materials of the samples 1-3 in accordance with the present embodiment, comprise graphite-like microcrystalline carbons and they are highly precise carbon materials. At the same time, the carbon materials selectively have porous or amorphous structure. Owing to this, the carbon materials have as high capacitance as that of the carbon materials described in patent document 1-2 and low internal resistance.

## Claims

1. A carbon material for electric double layer capacitors having:
the BET specific surface area in a range of 300 to 1000 m²/g;
the carbon interlayer distance in a range of 0.360 to 0.380 nm; and
the carbon strength of 2000 cps or more.

2. An electric double layer capacitor comprising said carbon material, having:
the BET specific surface area in a range of 300 to 1000 m²/g;
the carbon interlayer distance in a range of 0.360 to 0.380 nm; and
the carbon strength of 2000 cps or more.
